Europäisches Patentamt

European Patent Office

Office européen des brevets

(19)

(11) Publication number: **0 121 909**
**A1**

## (12) EUROPEAN PATENT APPLICATION

(21) Application number: **84103800.3**

(22) Date of filing: **05.04.84**

(51) Int. Cl.³: **B 23 K 11/10**

(30) Priority: **06.04.83 US 482401**

(43) Date of publication of application: **17.10.84**
**Bulletin 84/42**

(84) Designated Contracting States: **DE FR GB IT SE**

(71) Applicant: **UNIMATION INC., Shelter Rock Lane, Danbury Connecticut 06810 (US)**

(72) Inventor: **Engelberger, Joseph F., R.F.D. 1 Taunton Hill Road, Newtown Connecticut 06470 (US)**

(74) Representative: **Bauer, Robert, Dipl.-Ing., Boeters, Bauer & Partner Patentanwälte Thomas-Wimmer-Ring 14, D-8000 München 22 (DE)**

(54) Industrial robot spot welding arrangement using single welding electrode.

(57) An industrial robot is employed to perform single electrode spot welding operations by providing a fixed back up plate (20) spaced from the workpiece (14) and shaped to conform to the contour of the workpiece. A single welding electrode (16) is mounted on one piston of a dual piston cylinder (30) which is carried by the manipulator arm (32) and is positioned between the workpiece (14) and the back up plate (20) in alignment with a desired spot weld point. When fluid under pressure is supplied to the cylinder (30), one piston moves the welding electrode (16) down into engagement with the workpiece (14) and the other piston moves upwardly into engagement with the back up plate (20). With this arrangement the arm moving means of the industrial robot is not called upon to develop or withstand the large force exerted on the welding electrode (16), which is necessary to develop a suitable spot weld.

0121909

The present invention relates to industrial robots, and, more particularly, to an arrangement for performing a series of spot welding operations using an industrial robot. While the invention is of general application in situations where a single welding electrode is to be used, it is particularly adapted to the automotive spot welding field and specifically to the spot welding of the floor trough portions of automobile, truck or van bodies.

One of the major applications of industrial robots today is in the field of automotive body spot welding. In these automotive spot welding applications, a weld gun assembly is mounted on the end of the boom or arm of the robot, this assembly including a pair of welding jaws which are open so that they may be moved inwardly over the edge of the workpiece and then clamped to the workpiece on either side thereof after the arm has been moved to a desired location at which a spot weld is to be made. After these welding jaws, or electrodes, have been closed under the workpiece, a current is passed between the electrodes to make a spot weld at that location on the workpiece.

While such spot welding operations are in widespread useage in the automotive industry, they are necessarily limited to spot welding applications where the spot welds are to be made relatively close to the edges of the car body. In situations where spot welds are to be made in the middle of the car body, as for example, when the trough in the center of the floor of a car or truck body is to be spot welded, the jaws of a conventional weld gun assembly cannot be opened sufficiently to permit the welding electrode to reach the desired spot weld locations around the car body trough.

For such car body trough welding operations, it is necessary to use a so-called push type of spot welding arrangement in which the car body workpiece is positioned on a common ground electrode, which is shaped to conform to the shape of the workpiece, and a single welding electrode is pushed down into engagement with the upper surface of the workpiece at various points where spot welds are to be made. A current is then passed from the single electrode through the workpiece and into the ground electrode. This single electrode must be pushed against the workpiece with substantial force so that the workpiece is held tightly against the underlying ground electrode in order that a suitable spot weld can be made.

Two types of arrangements are currently employed to achieve the necessary force required to make a good spot weld under these conditions. In one such arrangement an array of single welding electrodes is mounted in a vertically movable press-type structure which can be lowered so that the welding electrodes simultaneously engage the upper surface of the workpiece at the desired spot weld locations, and press the workpiece into engagement with the common ground electrode with substantial force. Welding current is then applied to this array of single electrodes, usually sequentially to avoid overloading the welding current power supply, so that the desired series of spot welds is made on the workpiece.

In another type of car body trough welding arrangement, an industrial robot is mounted on a portal structure directly over the car body workpiece and the single welding electrode is mounted on the end of the robot arm. The force required to hold the welding electrode against the workpiece and the workpiece against the ground electrode is developed

-2-

solely by the arm moving means of the industrial robot. Such an arrangement requires a very special manipulator arm construction with massive, specially designed linkages and heavy duty drive means in order to develop or withstand the required electrode force on the workpiece. Also, such an arrangement is severely limited in the location of the industrial robot which must be mounted directly above the workpiece in order for the specially designed force developing linkages to be effective.

The invention as claimed is intended to remedy these drawbacks. It primarily solves the problem of how to design an industrial robot or, more precisely, a programmable manipulator arrangement for spot welding where a manipulator arm holds a single welding electrode, thus that the necessary force for pressing this electrode against the workpiece must not be developed by the arm moving means.

According to the invention a fixed back-up structure is spaced a substantial distance from the workpiece which conforms to the contour of the workpiece, the arm of the robot merely acting to position e.g. a pneumatic or hydraulic cylinder carried on the end of the arm between the workpiece and the back-up structure so that when fluid under pressure is supplied to the cylinder carried by the arm the reaction force developed when the single welding electrode is held against the workpiece is taken up by the fixed back-up structure rather than by the arm moving means of the industrial robot.

An additional advantage of the manipulator arrangement according to the invention resides in that the robot proper may be of standard construction.

The dependent claims concern advantageous further developments of the aforementioned invention.

A preferred embodiment is described in detail below with reference to the accompanying drawings, in which

FIG. 1 is a front elevational view of the improved industrial spot welding arrangement of the present invention;

FIG. 2 is a top view of the arrangement of FIG. 1;

FIG. 3 is a sectional view taken along the lines 3-3 of FIG. 1;

FIG. 4 is a view similar to FIG. 3 but showing the single electrode welding assembly with the pistons thereof in actuated position;

FIG. 5 is a fragmentary view of an alternative embodiment of the invention showing the manner in which a cylinder is aligned with the back-up structure;

FIG. 6 is a sectional view taken along the lines 6-6 of FIG. 5; and

FIG. 7 is a perspective view, on a somewhat larger scale, of the arrangement of FIGS. 5 and 6 illustrating the

-4-

details of the cooperation of the back-up structure with the welding cylinder carried by the arm of the robot.

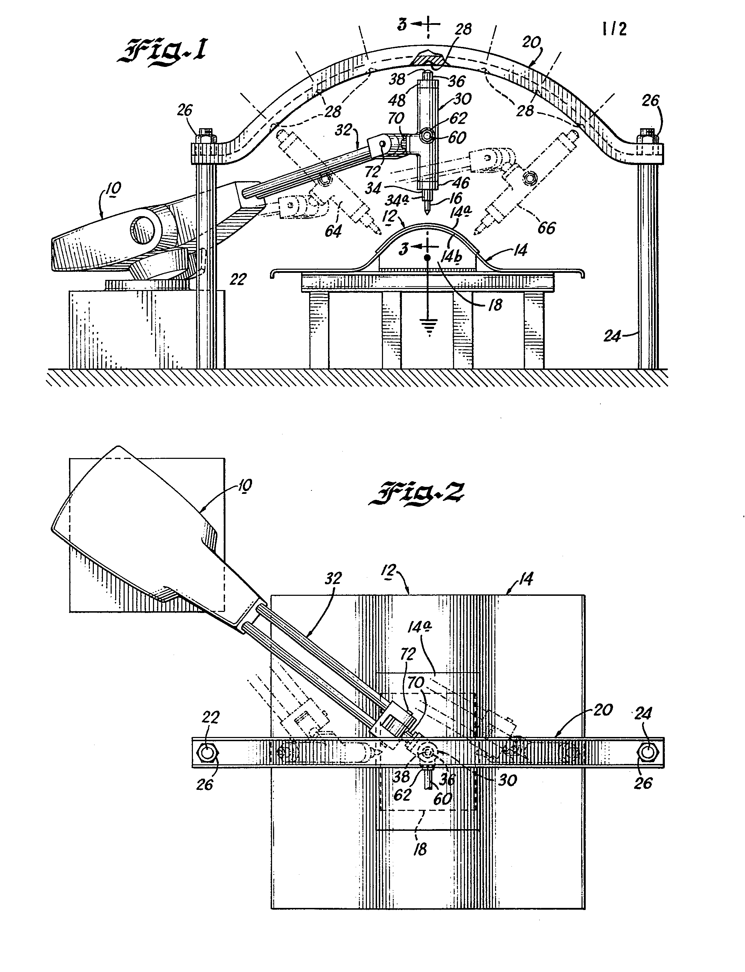

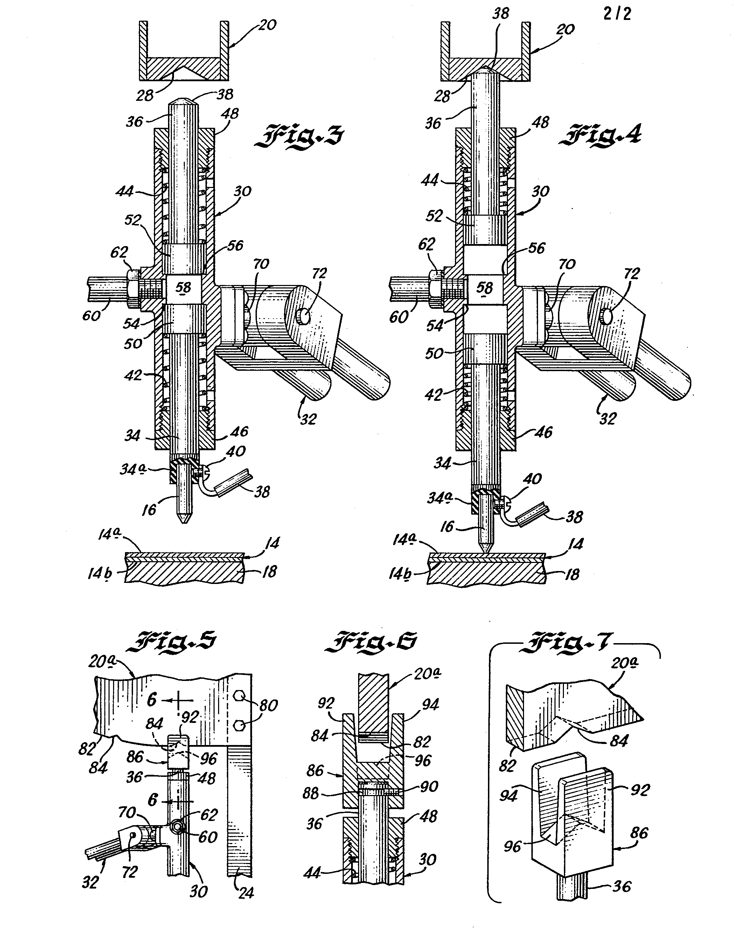

Referring now to the drawings, and more particularly to FIGS. 1-4, inclusive thereof, the present invention is therein illustrated in connection with an industrial robot indicated generally at 10 which is employed to perform a series of spot welding operations on the curved portion 12 of the floor section 14 of a car or truck body, the curved portion 12 forming the conventional trough in the center of the floor portion 14 which provides clearance for the transmission and associated parts of the car or truck. The specific spot welding operation is of the single electrode type wherein the single welding electrode 16 is to be moved into engagement with the top plate 14a to be welded and hold it against the portion 14b of the floor section 14 and in engagement with a conductive ground electrode 18.

In accordance with an important aspect of the present invention a rigid back-up plate 20 is spaced a substantial distance from the curved portion 12 of the workpieces 14a, 14b and is supported on the posts 22 and 24 by means of the bolts 26. The back-up plate 20 is shaped to conform to the contour of the portion 12 which is to be spot welded and is provided with a series of locating recesses 28 corresponding to each of the spot welds which is to be made in the curved portion 12. Specifically, each of the recesses 28 is positioned along a perpendicular from the curved surface 12 of the workpiece at the location of the desired spot weld.

A dual piston cylinder indicated generally at 30 is mounted on the end of the extendable arm portion 32 of the industrial robot 10, the downwardly extending piston 34 of

-5-

0121909

the cylinder 30 having the single welding electrode 16 mounted on the bottom end thereof and the upper piston 36 having a cap portion 38 (FIG. 3) which is adapted to be inserted into one of the recesses 28. In particular, the welding electrode 16 is mounted in the insulated end portion 34a of the bottom piston rod 34 and electrical connection is established to the electrode 16 through the connecting wire 38 and the set screw 40. The piston rods 34 and 36 are held in the withdrawan or retracted positions shown in FIG. 3 by means of the coil springs 42 and 44, respectively which are positioned between the end caps 46 and 48 of the cylinder 30 and the respective pistons 50 and 52 and urge these pistons against the shoulders 54 and 56 formed in the cylinder 30. Fluid under pressure may be selectively supplied to the chamber 58 between the pistons 50, 52 through the conduit 60 and the fitting 62 in the side of the cylinder 30. However, in the absence of such fluid under pressure in the chamber 58 the springs 42, 44 function to hold the pistons in the retracted position shown in FIG.3.

The industrial robot 10 is provided with a conventional control system in which stored command signals are sequentially employed during each playback cycle to position the end of the arm 32 at different desired locations. In the present invention such stored command signals are employed to position the welding electrode 16 over the desired spot weld point on the curved portion 12 of the workpieces 14a, 14b with the longitudinal axis of the dual piston cylinder 30 extending perpendicular to a tangent at the surface of the workpiece where the spot weld is to be made so that the upper piston rod 36 will be in alignment with one of the recesses

-6-

28 in the back-up plate 20. After the cylinder 30 has thus been positioned by movement of the various drive axes of the industrial robot 10, fluid under pressure is supplied through the conduit 60 into the chamber 58 so that the welding electrode 16 is moved downwardly into engagement with the workpiece 14a while at the same time the upper piston 36 is moved upwardly into engagement with one of the recesses 28 in the back-up plate 20, as shown in FIG. 4. Since the back-up plate 20 is of massive rugged construction, a substantial pressure may be supplied to the chamber 58 so that the electrode 16 is forced against the upper surface of the workpiece 14a with substantial force and holds the workpieces 14a, 14b against the ground electrode 18 so that a satisfactory spot weld can be made. During this operation the back-up plate 20 provides a rigid structure against which the dual acting cylinder 30 may work so that the desired electrode holding force is provided without requiring this force to be developed by the drive mechanisms of the various controlled axes of the industrial robot 10. Since the dual acting cylinder 30 is relatively light, a relatively light weight robot 10 may be employed to position the cylinder 30 in alignment with the desired axis over the spot weld point while the desired force for holding the welding electrode 16 against the work is developed by reacting against the fixed back-up plate 20.

After the pistons 50, 52 have been moved to the position shown in FIG. 4 a welding current is supplied over the cable 38 to the single electrode 16 so that current flows through the workpieces immediately below this electrode and into the ground electrode so as to make a spot weld at that location. After this spot weld is completed and the current

0121909

flow is terminated, the application of fluid under pressure to the chamber 58 is terminated so that the springs 42, 44 return the pistons 50, 52 to their retracted positions as shown in FIG. 3. After these pistons have been retracted, the control system of the robot then moves the cylinder 30 into alignment with a different desired spot weld point and the corresponding recess 28 in the back-up plate 20, fluid under pressure is again supplied to the chamber 58 so as to move the electrode 16 into engagement with the workpiece and the piston 36 into engagement with the back-up plate, after which another spot weld is made on the workpiece. Two such different positions of the cylinder 30 are shown in dotted lines at 64 and 66 in FIG. 1.

In the illustrated embodiment the cylinder 30 is mounted on the end of the hand member 70, this member in turn being bodily movable about the hand axis 72 so that the cylinder 30 may be positioned by rotation about the hand axis 72 and by rotation about the axis of the member 70. In this connection it will be understood that if an additional hand axis is required to position the cylinder 30 at any desired alignment axis, such additional hand axis may be employed in so far as the present invention is concerned. Here again, these hand axes may be of relatively light construction and have light weight drive means associated therewith since they are required simply to align the cylinder 30 with the desired weld point and do not themselves have to produce the force necessary to hold the welding electrode 16 against the workpiece during a spot welding operation. It should also be noted that the present invention is capable of accommodating different shaped workpieces by simply removing the back-up

-8-

0121909

plate 20 from the post 22, 24 and substituting a back-up plate of different configuration which will match the contour of the workpiece to be welded. Furthermore, the series of spot welds do not have to be in a straight line, as in the illustrated embodiment, but may be made at any desired point on the workpiece, it being only necessary to shape the back-up plate 20 so that it has a portion in alignment with a perpendicular from the surface of the workpiece at the desired spot weld location.

The recesses 28 are provided in the back-up structure to locate the upper piston rod 36 relative to the back-up plate 20. However, any other suitable arrangement may be employed for insuring that the upper piston rod 36 does not slip relative to the back-up plate 20 as pressure is supplied to the cylinder 30. It is also pointed out that with the arrangement of the present invention the location of the industrial robot 10 is not limited since it need not be placed immediately above the workpiece as in prior art arrangements. Also, the heavy portal structure required to mount an industrial robot above the workpiece and support it for movement to the various spot weld locations is eliminated, it being necessary only to supply the back-up plate 20 and the post 22, 24 in conjunction with a conventional industrial robot 10 to perform single electrode spot welding operations by means of the dual piston cylinder 38. In this connection it is also pointed out that the supply of fluid under pressure to the chamber 58 may be either air under pressure or hydraulic fluid under pressure. If air under pressure is used the conduit 60 may comprise the conventional air hose which is connected to the gripper mounted on the end of the manipulator arm in conventional industrial robot applications for handling materials, such air pressure being employed to actuate the clamping jaws of the gripper so as to grasp an article which is to be transported by the robot.

In FIGS. 5-7, inclusive, an alternative back-up plate arrangement is shown which may be employed in connection with the present invention, identical elements in the two embodiments being identified by the same reference numerals. Referring to these figures, a back-up plate 20a is employed in this embodiment, this back-up plate being in the form of an edge mounted plate which is secured to the post 22, 24 by means of the bolts 80, the bottom edge 82 of the plate 20a being shaped to conform to the contour of the workpiece and being provided with the locating notches 84 corresponding to the desired spot weld points. A U-shaped guide member 86 is mounted on the end of the upper piston 36 and is retained within the groove 88 by means of the set screw 90 so that the guide member 86 may be rotated relative to the upper piston rod 36. The arm portions 92, 94 of the guide member 86 are arranged to extend upwardly around the sides of the back-up plate 20a. The guide member 86 is provided with a wedge shaped portion 96 intermediate the arms 92, 94 which is adapted to seat in one of the notches 84 when the cylinder 30 is actuated and the piston rod 36 is moved upwardly into engagement with the back-up plate 20a. In the embodiment of FIGS 5-7, inclusive, the arm portions 92, 94 are sufficiently long that they remain above the bottom edge of the back-up plate 20a when the piston rod 36 is in its retracted position, as shown in FIG. 5. With such an arrangement the member 86 acts to guide the cylinder 30 as it is moved from one spot weld position to the next, the guide members 86 swiveling about the piston rod 36 if such action is necessary during movement from one spot weld to the location to the next.

While there have been illustrated and described various embodiments of the present invention, it will be apparent that various changes and modifications thereof will occur to those skilled in the art.  It is intended in the appended claims to cover all such changes and modifications as fall within the true spirit and scope of the present invention.

What is claimed as new and desired to be secured by Letters Patent of the United States is:

0121909

CLAIMS:

1. A programmable manipulator arrangement for making a series of spot welds on a work piece, which includes a manipulator arm (32), means (10) for moving said arm in a plurality of axes so that the end of said arm is sequentially moved to a series of positions relative to a workpiece on which a series of spot welds is to be made, and a welding electrode assembly (30) mounted on the end of said manipulator arm, _characterized_ by the provision of a fixed back-up structure (20) positioned in spaced relation to the work piece and conforming generally to the shape of said series of spot welds thereon, and means (50, 52) mounted on the end of said manipulator arm for simultaneously urging said welding electrode assembly (30) into engagement with both the workpiece and said fixed back-up structure with a predetermined force which is sufficient to permit a spot weld to be made at said point of engagement with the work piece.

2. The arrangement of claim 1, wherein said welding electrode assembly includes a welding electrode (16) which is movable relative to the end of said manipulator arm and a brace member (36) which is movable relative to the end of said manipulator arm, and means (50, 52) for simultaneously urging said movable welding electrode into engagement with the work piece and said movable brace member into engagement with said fixed back-up structure.

3. The arrangement of claim 2, which includes a cylinder (30) mounted on the end of said manipulator arm, a first piston (50) in said cylinder and mounted to said welding electrode (16), a second

- 12 -

piston (52) in said cylinder and connected to said brace member (36), and means (60) for supplying fluid under pressure between said pistons to establish said predetermined force.

4. The arrangement of claim 3, which includes means (42, 44) operative in the absence of fluid under pressure between said pistons for urging said pistons toward each other so that said welding electrode and said brace member are out of engagement with the workpiece and said back-up structure.

5. The arrangement of claim 1 in which said series of spot welds are made at points along a curved surface of the workpiece.

Fig.1

Fig.2

0121909

1/2

*Fig·3*

*Fig·4*

*Fig·5*

*Fig·6*

*Fig·7*

0121909

European Patent
Office

**EUROPEAN SEARCH REPORT**

Application number

| DOCUMENTS CONSIDERED TO BE RELEVANT | | | EP 84103800.3 | |
|---|---|---|---|---|
| Category | Citation of document with indication, where appropriate, of relevant passages | Relevant to claim | CLASSIFICATION OF THE APPLICATION (Int. Cl. ³) | |
| X | DE - A1 - 2 700 602 (DAIMLER-BENZ AG) <br> * Fig. 1,2 * <br> -- | 1-5 | B 23 K 11/10 | |
| A | DE - C - 932 263 (JUNKERS FLUG-ZEUG- UND MOTORENWERKE AG) <br> * Fig. 3 * <br> ---- | 3,4 | | |
| | | | **TECHNICAL FIELDS SEARCHED (Int. Cl. ³)** | |
| | | | B 23 K 11/00 <br> B 25 J 11/00 | |

The present search report has been drawn up for all claims

| Place of search | Date of completion of the search | Examiner |
|---|---|---|
| VIENNA | 07-06-1984 | BENCZE |

**CATEGORY OF CITED DOCUMENTS**

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO Form 1503 03.82